(19)

**Europäisches Patentamt**

**European Patent Office**

**Office européen des brevets**

(11) **EP 4 566 457 A1**

(12) **EUROPEAN PATENT APPLICATION**

(43) Date of publication:
**11.06.2025   Bulletin 2025/24**

(21) Application number: **23215295.9**

(22) Date of filing: **08.12.2023**

(51) International Patent Classification (IPC):
**A23K 50/80** (2016.01)        **A23K 10/16** (2016.01)
**A23K 20/147** (2016.01)

(52) Cooperative Patent Classification (CPC):
**A23K 50/80; A23K 10/16; A23K 10/30;
A23K 20/147**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Lietuvos sveikatos mokslu universitetas**
**44307 Kaunas (LT)**
• **Gamtos Tyrimu Centras**
**08412 Vilnius (LT)**
• **UAB Naujasis Nevezis**
**53288 Ilgakiemis, Kauno raj. (LT)**

(72) Inventors:
• **Savickiene, Nijole**
**Kaunas (LT)**
• **Karosiene, Jurate**
**Vilnius (LT)**
• **Balciunaite - Murziene, Gabriele**
**Kaunas (LT)**
• **Kudlinskiene, Ieva**
**Kauno r. (LT)**
• **Bernatoniene, Jurga**
**Kaunas (LT)**

• **Montvydiene, Danguole**
**Vilnius (LT)**
• **Paleckaitis, Mindaugas**
**Kaunas (LT)**
• **Kasperoviciene, Jurate**
**Vilnius (LT)**
• **Mikniene, Zoja**
**Kaunas (LT)**
• **Morudov, Dmitrij**
**Vilnius (LT)**
• **Jurgelene, Zivile**
**Vilnius (LT)**
• **Matulyte, Inga**
**Kaunas (LT)**
• **Skrodenyte-Arbaciauskiene, Vesta**
**Vilnius (LT)**
• **Dainys, Justas**
**Vilnius (LT)**
• **Savickas, Arunas**
**Kaunas (LT)**
• **Jekabsone, Aiste**
**Kaunas (LT)**

(74) Representative: **AAA Law**
**A. Gostauto 40B**
**03163 Vilnius (LT)**

(54) **IMPROVEMENT OF NUTRITIONAL VALUE OF FISH FEED**

(57)    This invention relates to optimization of standard fish feed by incorporating a c-phycocyanin additive into a standard fish feed in an oil suspension. Isolated c-phycocyanin, which is isolated from the biomass of the genus *Microcystis* (microalgae) and *Aphanizomenonflos-* *aquae* (Klamath algae), improves the physiological parameters, growth intensity and physical/chemical meat properties of rainbow trout (*Oncorhynchus mykiss*) and African catfish (*Clarias gariepinus*).

Fig. 1

**Description**

FIELD OF THE INVENTION

This invention is related to the field of aquaculture, particularly with increasing efficiency of standard fish feed, especially to improving the physiological parameters, growth intensity and physico-chemical meat properties of rainbow trout (*Oncorhynchus mykiss*) and African catfish (*Clarias gariepinus*)*.*

BACKGROUND OF INVENTION

Rainbow trout (*Oncorhynchus mykiss*) is one of the most common species grown in closed recirculating systems due to its many advantages, including adaptation to the environment, reproductive efficiency and resistance to diseases (Verdile et al., 2020). Nevertheless, the regular pressure to optimize farming efficiency involves various aspects, including the continuous improvement of feed rations (Asgari et al., 2020; Ghosi Mobaraki et al., 2020). Nutrition is considered one of the most important factors determining the ability of fish to resist diseases. A well-balanced feed is essential to prevent diseases and maintain normal fish health. Fish that are raised in the right conditions experience less stress and absorb feed better. These factors greatly influence the final quality of the produce (Van de Vis et al., 2012; Yengkokpam et al., 2016). African catfish (*Clarias gariepinus*) is also a fish that receives a lot of attention and is farmed at closed recirculating systems (CRS). Farmers were attracted by the fish's biological characteristics: faster growth, resistance to diseases, and high yield of cultured meat per cubic meter of water (Sogbesan et al., 2006). In Europe, African catfish is grown in closed recirculation systems only, where appropriate water temperature can always be maintained.

In a closed recirculation system, fish feeding is one of the most important factors determining production efficiency. Most often, in this system, fish is fed automatically (quantitative feed is supplied at a certain time), which allows more efficient use of feed, reducing the feed conversion ratio, avoiding overfeeding of fish and water pollution (Zhou et al., 2018; Wu et al., 2015).

The main nutrients in trout feed are proteins, fats, carbohydrates, vitamins and minerals, and prebiotic cultures or hormones (for special needs) can also be used. As fish have limited ability to synthesize protein at the rate required for maximal growth, protein must be obtained from the feed they consume (Nates, 2015). The need for protein is greater in the early stages of life. As fish grow, protein requirements generally decrease (Craig et al., 2017). The diets for fish farmed in closed recirculating systems must contain a sufficient amount of omega-3 fatty acids to ensure complete nutrition and optimal growth. Deficiency of omega-3 fatty acids results in poor growth of trout and catfish, adversely affects feed conversion ratio, and can cause shock syndrome in fish (Webster et al., 2002). Normally, the fatty acid that is required is provided by fish oil used in feed. In recent years, due to economic and environmental reasons, fish oil is gradually being replaced by more sustainable alternative sources of lipids - mainly vegetable oils (Tocher, 2015). Replacing fish oil with vegetable oils is controversial. Results of scientific studies show that replacing fish oil with vegetable oils slows down the growth rate of fish (Abbasi et al., 2020; Campos et al., 2019; Torrecillas et al., 2017). Also, in addition to potential effects on growth, fish oil replacement can negatively affect fish welfare, increase sensitivity to stress, and weaken immunity (Serradell et al., 2020). Rainbow trout and African catfish do not have a high need for carbohydrates (starch and sugar) in their diet. In fish, carbohydrates are stored as glycogen reserves. They are mobilized to meet energy needs. Carbohydrates are the most economical and cheapest source of energy in fish nutrition (Prabu et al., 2017). They are included in the feed of aquaculture animals to reduce feed costs. Carnivorous fish, including rainbow trout, are considered glucose intolerant. Feed with a high percentage of plant-based raw materials, rich in carbohydrates, can cause hyperglycemia in trout (Kamalam et al., 2017). Vitamins are not synthesized in the fish body, so they must be included in the composition of fish feed. Ascorbic acid is essential for many aquatic animals, including rainbow trout and African catfish. Vitamin C is a common cofactor for many hydroxylating enzymes and is also an important component in skin collagen synthesis. Vitamin C acts as a strong reductant in the body and is involved in physiological processes including growth, reproduction, proper immune system function, and response to stress (Tsao, 1997; Trichet, 2010). Fat-soluble vitamin E is known not only to reduce lipid peroxidation, but also to improve the sensory quality of fish products (Lukaszewicz et al., 2004). Micronutrients are required for vital functions, such as metabolism, growth and reproduction. Minerals are also important for bone formation, maintenance of the colloid system, acid-base balance, and the function of bioactive compounds, such as hormones and enzymes (Trushenski et al., 2006).

Rainbow trout and African catfish are economically important fish whose diet consists largely of raw materials of animal origin. The raw materials used in production of fish feed are: fish flour, poultry flour, blood products, wheat flour, wheat and corn gluten, insect flour, feather flour, pig bristle flour, prebiotics, and pigment substances. The rapid growth of aquaculture has led to a high demand for animal components in the feed industry, leading to a significant increase in the prices and demand for these raw materials (Froehlich et al., 2018). For these reasons, a lot of research has been carried out in the last three decades to find cheaper alternative protein sources, such as plant proteins, that meet the needs of carnivorous fish (Barragan-Fonseca et al., 2017; Ismail et al., 2019). Due to this, intensive research has been conducted in recent years to use microalgae in fish feed production (Hassaan et al., 2021).

Patents (No. KR102106122B1, No. KR101620734B1) provide information on technologies for production of feed and food additives by using biomass of cyanobacteria (blue-green algae) *Spirulina,* while KR102106122B1 defines the technology for production of animal feed enriched with cyanobacteria (blue-green algae) *Spirulina* biomass additive, which in its complex composition has one of the biologically active substances C-phycocyanin. *Spirulina* biomass is used as an additional source of amino acids, minerals, vitamins (catorenoids, group B vitamins) and fatty acids, characterized as improving animal health. KR101620734B1 defines animal feed and human food additive containing biomass of cyanobacteria (blue-green algae) *Spirulina,* i.e. a source of C-phycocyanin. KR102106122B1 defines functional treats for pets (dogs), the composition of which is enriched with biomass of cyanobacteria (blue-green algae) *Spirulina.* The feed is made from minced meat or fish with addition of *Chenopodium quinoa,* carrots, blueberries, cabbage, lotus roots, *Spirulina* biomass, and sorbitol. A solution of fermented lotus roots with good *Lactobacillus* bacteria was added to the resulting mass. Water was removed from the resulting mass by heating, followed by freezing and lyophilization. The resulting lyophilisate was formed into feed pellets of the desired size and shape. KR101620734B1 describes a food supplement (powder) with *Spirulina* biomass for human and animal food. Primary raw materials - meat and fish, various seeds, plants and mushrooms are thermally treated, followed by drying and grinding (to make a powder). The crushed primary mixture of raw materials was mixed with fishmeal, plant and mushroom powder, and *Spirulina.* The resulting powder mixture was heated and packaged.

SUMMARY OF THE INVENTION

The invention disclosed herein provides a fish feed additive with c-phycocyanin, as well as fish feed enriched with c-phycocyanin, and describes the production and incorporation of a purified c-phycocyanin functional additive into a standard fish feed.

*In vivo* studies have demonstrated the effectiveness of a suspension with c -phycocyanin added to a standard fish feed in the oil phase on the physiological parameters, growth intensity and physico-chemical meat properties of rainbow trout (*Oncorhynchus mykiss*) and African catfish (*Clarias gariepinus*). For the first time, the effectiveness of the prepared technology with isolated c-phycocyanin isolated from the *Microcystis* (microalgae) genus and *Aphanizomenon flos-aquae* (Klamath algae) biomass on the physiology and nutritional value of rainbow trout (*Oncorhynchus Mykiss*) and African catfish (*Clarias gariepinus*) was demonstrated.

The effect of c-phycocyanin functional additive on physiological parameters and growth intensity: studies have proven the benefits of fish feed enriched by c-phycocyanin on fish morphological indicators and intestinal microbiota. It was found that fish fed with c-phycocyanin-enriched feed had a faster growth rate, and a statistically significant higher absorption coefficient and liver somatic index. *Bacillaceae-Bacillus* relative abundance was significantly increased in the intestinal microbiota of fish fed c-phycocyanin-enriched feed. *Bacillus* spp. are classified as probiotics that can improve the functional condition of fish, so it can be said that the better growth of fish fed with c-phycocyanin-enriched feed can be caused by the c-phycocyanin in the feed. The effect of c-phycocyanin functional additive on the physical and chemical properties of fish: the benefit of functional fish feed enriched with c-phycocyanin for fish meat was evaluated. It was found that the addition of c-phycocyanin to the extruded complete feed for African catfish had a positive effect on the amount of protein in the meat, and for rainbow trout it activated the synthesis of polyunsaturated, omega-3 and omega-6 fatty acids. According to the data of our study, the addition of c-phycocyanin to the feed had a positive effect on the synthesis of eicosapentaenoic and docosahexaenoic fatty acids in the meat of both African catfish and rainbow trout. Incorporation of c-phycocyanin into the complete feed formulations had a positive effect on intestinal villi development in rainbow trout and African catfish.

BRIEF DESCRIPTION OF DRAWINGS

Fig. 1 C-phycocyanin content (A) and purity (B) depending on the buffer solutions used for extraction.

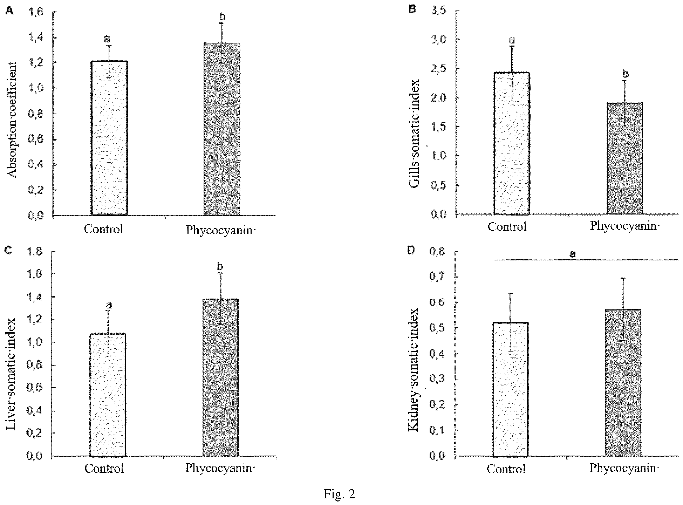

Fig. 2 Changes in the somatic indexes of the morphological indexes - condition factor (A), gills (B), liver (C) and kidneys (D) in *O. mykiss* after 3 months' fed diets c-phycocyanin (Kruskal-Wallis test, mean $\pm$ SD, N = 21; different letters indicate significant differences between different groups, p < 0.05).

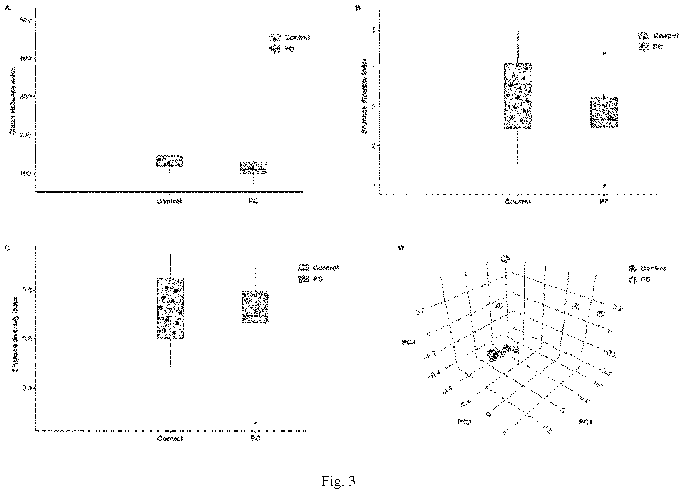

Fig. 3 Alpha and beta diversity of the intestinal microbiota of rainbow trout (*O. mykiss*) in control (Control) fed by -phycocyanin (PC)-enriched feed (mean $\pm$ SD, N = 6). (A) Chao1 richness, (B) Shannon diversity, (C) Simpson diversity, (D) beta diversity: principal coordinate analysis (PCoA) is based on Bray-Curtis dissimilarity distances between sampled ASVs.

DETAILED DESCRIPTION OF THE INVENTION

Research methods were used to investigate the effect of the feed enriched with c-phycocyanin, which can be extracted from cyanobacteria or made synthetically, on fish exterior, meat physicochemical properties, fatty acid composition and histological changes in the intestine in rainbow trout and African catfish (however, the composition of the feed allows to use it for feeding various types of fish). Fish feed additive - c-phycocyanin - is used to improve the nutritional properties of fish feed and is isolated, for example, in an oil suspension in which its concentration is from 0.001% to 89% (m/m), and in feed - concentration from $1*10^{-6}$ % to $8.9*10^{-2}$ % (m/m).

The invention disclosed herein provides a fish feed additive comprising c-phycocyanin.

In some embodiments, the c-phycocyanin used in the fish feed additive is isolated. In some embodiments, c-phycocyanin is isolated from cyanobacteria; for example, c-phycocyanin can be isolated from the biomass of *Microcystis* and/or *Aphanizomenon* genera. In other examples, c-phycocyanin can be isolated from the biomass of *Aphanizomenon flos-aquae.* In some embodiments, the c-phycocyanin provided in the fish feed additive is synthetic, e.g., chemically synthesized.

In some embodiments, the fish feed additive contains c-phycocyanin in an oil suspension. For example, an aerosil gelled oil emulsion can be used. In other examples, another oil form in which the c-phycocyanin is provided may be used. A fish feed supplement with c-phycocyanin can also be in a non-oily form, for example, in another liquid form or powder, etc. solid forms. It is understood that c-phycocyanin can be provided in such forms as are necessary and appropriate in particular cases in the fish feed additive described herein to improve the properties of the fish feed.

In some embodiments, the concentration of c-phycocyanin in the fish feed additive, such as an oil suspension, is between 0.001% and 89% (w/w). In some embodiments, the concentration of c-phycocyanin may be from 0.01% to 8.9%, preferably from 0.05% to 0.89%, or from 0.05% to 0.089%. In some embodiments, the concentration of c-phycocyanin in a fish feed additive, such as an oil suspension, is about 0.1%.

Further disclosed is the use of a c-phycocyanin-containing fish feed additive of the present invention to improve the nutritional properties of fish feed. In some embodiments, the fish are rainbow trout (*Oncorhynchus mykiss*) and/or Africann catfish (*Clarias gariepinus*). Accordingly, fish feed enhanced (supplemented/enriched) with a fish feed additive with c-phycocyanin has the advantage of faster growth and development of the fish fed with it.

Further disclosed is a fish feed comprising a fish feed additive with c-phycocyanin in accordance with the invention disclosed herein. Fish feed can be provided in various forms, such as solid form, pellets, flakes.

In some embodiments, the final concentration of c-phycocyanin in the fish feed is from $1*10^{-6}$ % to $8.9*10^{-2}$ % (w/w). In some embodiments, the concentration of c-phycocyanin may be from $1*10^{-5}$ % to $8.9*10^{-3}$ %, or, for example, from $1*10^{-4}$ % to $8.9*10^{-4}$ %. In some embodiments, the final concentration of c-phycocyanin in the fish feed is about $1*10^{-4}$ % (w/w). An additional advantage of using the fish feed additive with c-phycocyanin described herein in fish feed is that, by using isolated c-phycocyanin, it is possible to use different and higher amounts of c-phycocyanin because it is not toxic to fish. I.e. increasing the amount/concentration of c-phycocyanin in the feed does not increase the amount of other substances, as, for example, in cases where algae biomass or extract is used - in such cases, in order to increase the amount of c-phycocyanin, it would be necessary to increase the amount of other substances, often toxic at a certain concentration and metabolite levels.

Further disclosed is the use of the c-phycocyanin-containing fish feed of the present invention for feeding fish. Accordingly, fish feed enhanced (supplemented/enriched) with c-phycocyanin has the advantage of faster growth and development of the fish fed with it. In some embodiments, the fish is rainbow trout (*Oncorhynchus mykiss*) and/or African catfish (*Clarias gariepinus*).

The following methods and principles were used in the research described below:
All experimental fish were weighed, and their length was measured, body indexes were calculated, physical and chemical tests of meat were performed. Blood morphological and blood gas tests were performed. The main morphological indicators were used to assess the physiological condition of the fish - condition factor, somatic indexes of gills, liver and kidneys, and changes in blood parameters.

The condition factor for salmonids is a relative quantity expressed as a ratio of the body weight to the length of the fish.

The organ-somatic index is expressed as a percentage of the ratio of a certain organ (gills, liver, and kidneys) to the body mass.

Intestinal histological examinations were performed, and mid and distal intestinal contents were used for microbiota analysis, total microbial DNA isolation and sequencing were performed.

EXAMPLES

Example 1. Isolation of c-phycocyanin

<u>Extraction of c-phycocyanin.</u> Frozen cyanobacteria biomass was thawed by storing the samples in the dark at +4 °C. The 30 ml of sodium phosphate buffer solution (pH 7) was added to the test tubes with a volume of 5 mL of biomass (Khazi et al., 2018). In order to evaluate the effect of cell wall breakdown by ultrasound, the thawed biomass was additionally homogenized for 5 min with an ultrasonic sonicator (frequency 30 kHz). C - phycocyanin extraction was carried out for 60 min. keeping the samples in the dark at +4 °C. Three repetitions were made for each variation. Next, the samples were centrifuged for 10 min. $10000\times$ g at +4 °C. Quantitative (concentration) and qualitative (purity) indicators of c-phycocyanin were determined by spectrophotometric method by measuring light absorption at wavelengths of 615 nm, 620 nm, 652 nm and 280 nm. The amount of c-phycocyanin in the extract was calculated according to the formula (Bennett, Bogodar, 1973):

$$C - \text{phycocyanin} \left(\frac{\text{mg}}{\text{mL}}\right) = \frac{(A_{615} - A_{720}) - 0{,}474 \times (A_{650} - A_{720})}{5{,}35} \qquad (1)$$

The purity of c-phycocyanin was estimated according to the formula (Bennett, Bogodar, 1973):

$$\text{Purity} = \frac{A_{620}}{A_{280}} \qquad (2)$$

The results showed that the amount and purity of c-phycocyanin depend on the species of cyanobacteria predominant in the biomass and the cell wall breakdown method. When filamentous cyanobacteria *A. flos-aquae* dominates the biomass, up to 4.6 times higher amounts of c-phycocyanin were determined compared to biomass dominated by coccoid cyanobacteria of the genus *Microcystis* (Table 1).

Table 1. **Quality of c-phycocyanin after deposition with ammonium sulfate depending on the method of cell wall breakdown in cases of predominance of different cyanobacterial species in biomass**

| Water body, date | Predominant species of cyanobacteria (> 90%) | Purity of c-phycocyanin, $A_{620}/A_{280}$ | | | C-phycocyanin concentration, mg/mL | | |
|---|---|---|---|---|---|---|---|
| | | Freez./ Thaw. 1 cycle | Freez./ Thaw. + breakdown by ultrasound | Freez./ Thaw. 2 cycles | Freez./ Thaw. 1 cycle | Freez./ Thaw. + breakdown by ultrasound | Freez./ Thaw. 2 cycles |
| Kaunas lagoon, 04/09/2020 | *Microcystis* spp. | 0.518 | 0.450 | 0.502 | 31.03 | 23.84 | 29.98 |
| Kaunas lagoon, 18/10/2019 | *Aphanizomenon flos-aquae* | 1.259 | 0.692 | 1.515 | 62.46 | 111.11 | 76.27 |

The quality of c-phycocyanin in the predominant biomass of *A. flos-aquae* varied depending on the cell wall breakdown method. The highest amounts of c-phycocyanin were determined in the extracts by additional breakdown of the biomass with ultrasound and 2 times of freezing and thawing. Meanwhile, the purity of c-phycocyanin was the lowest during the additional breakdown of biomass by ultrasound. C - phycocyanin quality in the predominant biomass of *Microcystis* spp. differed slightly depending on the cell wall breakdown method. Therefore, considering time consumption and economic costs, the method of 1-cycle of freezing/thawing for biomass cell wall breakdown was chosen for c-phycocyanin extraction.

The quality of c-phycocyanin varied depending on the buffer solutions used for extraction. The highest purity and concentration of c-phycocyanin was determined by extraction in 0.01 M sodium phosphate buffer solution (Na-PB), 1.5% CaCl$_2$ solution and water (Figure 1.3). To evaluate the extraction costs, a 0.01 M Na-PB solution was used in the further steps of c-phycocyanin extraction.

<u>Deposition of c-phycocyanin with ammonium sulfate.</u> According to literature, the quality of c-phycocyanin depends on the concentration of ammonium sulfate used to deposit the target pigment. The highest quality of c-phycocyanin is obtained by saturating the suspension once up to 50% or by saturating the suspension up to 25% for the first time and up to 50% for the second time with ammonium sulfate (Khazi et al., 2018; Julianti et al., 2019). Considering the costs (cost of reagents, time consumption, and equipment operation costs), c-phycocyanin deposition was carried out by saturating the suspension once up to 50% with ammonium sulfate. The resulting deposit of the target protein was dissolved in a 0.01 M Na-PB solution and passed through a chromatographic column in the next step.

Purification of c-phycocyanin was performed using gel chromatography and ion exchange chromatography. Sephadex G-25 was used as a sorbent for gel chromatography, and Q-Sepharose XL was used for ion exchange chromatography.

The amount of c-phycocyanin purified by different chromatography methods in the extracts varied from 9.10 mg/mL to 208.61 mg/mL, purity ($A_{620}/A_{280}$) - from 0.94 to 2.60, depending on the species of cyanobacteria prevailing in the biomass.

Lyophilization. Purified c-phycocyanin was lyophilized. The determined purity ($A_{620}/A_{280}$) of 2.06 corresponded to a quality suitable for dietary supplements.

Example 2. Production of extruded feed for rainbow trout and African catfish

Taking into account the nutritional needs indicated in the literature and the raw materials recommended for the production of rainbow trout and African catfish, the recipes of the control and study groups for the fish feeding experiments were prepared (see Table 2 and 3). When creating these recipes of extruded complete feed for rainbow trout and African catfish, the highest quality raw materials were carefully selected, and their optimal ratio was determined. The formulation was made taking into account the needs of the most essential nutrients. After completing the experimental productions, repeated chemical tests of the final product and fish feeding experiments were carried out.

Table 2. **Formulations of feeds used in the rainbow trout feeding experiment**

| Raw material/Feed type | Control group | Study group I |
|---|---|---|
| | **Feed for rainbow trout without additives (%)** | **Feed for rainbow trout supplemented with c-phycocyanin (%)** |
| Wheat flour | 26.385 (1.32) | 26.285 (1.313) |
| Poultry flour | 10 (0.5) | 10 (0.5) |
| Fish flour | 16 (0.8) | 16 (0.8) |
| Hemoglobin flour | 9 (0.45) | 9 (0.45) |
| Fish oil | 18 (2.4) | 18 (2.4) |
| Wheat gluten | 10 (0.5) | 10 (0.5) |
| Corn gluten | 10 (0.5) | 10 (0.5) |
| Vitamin-mineral supplement | 0.5 (0.025) | 0.5 (0.025) |
| Antioxidant BHT | 0.015 (0.00075) | 0.015 (0.00075) |
| Prebiotic *Agrimos* | 0.1 (0.005) | 0.1 (0.005) |
| C-phycocyanin supplement (oil emulsion containing 0.1% c-phycocyanin) | 0 | 0.1 |
| **Total:** | 100 percent | 100 percent |

The 43% protein and 22 percent fat concentration was selected for rainbow trout formulation. As we can see from the data in Table 2, the rainbow trout feed of all groups contained the same amount of poultry flour, fish flour, fish oil, corn gluten, vitamin-mineral additive, antioxidant BHT and prebiotic Agrima, but the amount of wheat flour differed - after the addition of c-phycocyanin to the feed of the second study group addition, the amount of wheat flour is slightly reduced (0.1%).

Table 3. **Formulations of feeds used in the African catfish feeding experiment**

| Raw material/Feed type | Control group | Research group I |
|---|---|---|
| | **Feed for African catfish without additives (%)** | **Feed for African catfish supplemented with c-phycocyanin (%)** |
| Wheat flour | 39.385 (1.97) | 39.285 (1.96) |
| Poultry flour | 25 (1.25) | 25 (1.25) |
| Fish flour | 10 (0.5) | 10 (0.5) |
| Hemoglobin flour | 5 (0.25) | 5 (0.25) |
| Salmon oil | 6 (0.3) | 6 (0.3) |
| Corn gluten | 12 (0.6) | 12 (0.6) |
| Pea protein concentrate | 2 (0.1) | 2 (0.1) |
| Vitamin-mineral supplement | 0.5 (0.025) | 0.5 (0.025) |
| Antioxidant BHT | 0.015 (0.00075) | 0.015 (0.00075) |
| Prebiotic *Agrimos* | 0.1 (0.005) | 0.1 (0.005) |
| C-phycocyanin supplement (oil emulsion containing 0.1% c-phycocyanin) | 0 | 0.1 |
| **Total:** | 100 percent | 100 percent |

All formulations contained the same amount of poultry flour, fish flour, fish oil, corn gluten, pea protein concentrate, vitamin-mineral supplement, antioxidant BHT and prebiotic Agrima, but the amount of wheat flour differed depending on the amount of test components added. The feed of the control group contained 39.385% of them, while the amount of wheat flour was slightly reduced (0.1%) after supplementing the feed of the study group with c-phycocyanin additive - in order to maintain the same percentage of protein and fat in the feed of all groups.

Commercial fish feeds are compressed pellets that can be either sinking or floating. Pellets are produced by extrusion (Abowei et al., 2011; Craig et al., 2017). Extrusion is the main manufacturing process by which fish feed is produced. It is a process in which, under pressure, dry feed ingredients are compressed and heated, then extruded through an orifice in an extruder die. Extrusion is described as a "HTST" (high temperature short time) method (Huang et al., 2019). The obtained extrudate is dried and cooled, after which the additional required amount of fat is inserted with the help of a vacuum device. The physical quality of the final product is determined by various factors, such as water and fat injection, heat dissipation, and the configuration of the extruder screw and die (Close et al., 2018; Riaz, 2019). Extrusion technology offers various advantages to the feed: it increases the digestibility of nutrients, and the high temperature during the process destroys various bacteria and fungi. This method of feed production allows control of the physical properties of the feed: modulating the density to produce floating or slowly sinking pellets (Sørensen et al., 2010). A pellet floating in water expands more and has a lower density compared to a pellet that sinks (Sørensen, 2012). It is also aimed to produce feed that is resistant to mechanical effects in aquaculture: transportation, storage and feeding of fish. In the production of extruded feed, process parameters and feed formulation have a significant impact on feed quality (Tyapkova et al., 2016). Process settings, such as moisture content, screw speed, die size, etc., are required to obtain certain physical properties of the feed, so it is important that extrusion parameters are selected based on accurate knowledge of the effect of a given parameter and each component of the feed formulation (Luo et al. al., 2020).

The production process of extruded feed for rainbow trout and African catfish comprised the following stages: dosing the raw materials into the mixer, mixing and grinding, mixing the raw material mixture before production, 3.5 mm extrusion of extruded complete feed for rainbow trout, 4.5 mm extrusion of extruded complete feed for African catfish, extrudate drying, cooling, screening and packaging. The produced extrudate was packed in large bags, brought to the production warehouse and stored until the fat (salmon oil and oily c-phycocyanin suspension) was added.

While preparing to introduce the c-phycocyanin oil suspension, a portion of salmon oil was calculated, into which the calculated portion of the c-phycocyanin suspension was added. Oil suspension with c-phycocyanin was produced by dispersion method. C-phycocyanin powder was dispersed in a small amount of salmon oil (40-60% of the substance). Colloidal silicon dioxide (aerosil) powder was added and mixed until getting a homogeneous mass, and if the mass was very thick, a little oil was added. The mass was diluted with small amounts of oil and constantly stirred until all the oil poured in.

In a mixing and heating boiler (KKM 500, Karpowicz, Poland), these two raw materials (salmon oil and oily c-phycocyanin suspension) were mixed until they formed a homogeneous mass. The mixture of salmon oil and c-phycocyanin suspensions was heated to 35-40 °C and mixed again. At the end of the coating-by-fat process, the product was packaged in a big bag; the big bag was labeled according to labeling requirements.

The prepared bulk bags were stored until the product cooled down to ambient temperature ($\pm 5$ °C).

Example 3. Method of feeding fish with this product

The fish were grown for 4 months before the start of the experiment and daily fed with Coppens SPECIAL PRO EF 0.5-2 mm (Alltech Coppens GmbH, Germany) feed (daily feed rate was from 5.62% to 2% of the fish's body weight), the fish were fed twice a day (8: 00-9:00 in the morning and 17:00-17:30 in the evening).

During the entire experiment, the amount of feed was the same - 2% of the body weight of the experimental fish in one pool, weighing it with an accuracy of 1 g (ISHIDA IPC electronic scale). Every 3 weeks, control weight evaluations of the experimental fish were carried out and the amount of feed was adjusted accordingly for each experimental group.

Example 4. Results of the rainbow trout experiment

On the first day of the growing experiment, the mean body weight (value $\pm$ SD) of the fish in the control group was 152.3 $\pm$ 53.0 g, and the mean length (value $\pm$ SD) was 21.0 $\pm$ 2.8 cm. At the end of the growing experiment, the average body weight of the fish in the control group was 250.0 $\pm$ 104.0 g, and the average length was 26.9 $\pm$ 3.3 cm. The average body weight of the c-phycocyanin group fish on the first day of the rearing experiment was 153.3 $\pm$ 46.0 g, and the average length was 21.4 $\pm$ 2.5 cm. At the end of the growing experiment, the average body weight of the fish in the c-phycocyanin group was 426.7 $\pm$ 164.0 g, and the average length was 30.9 $\pm$ 3.9 cm.

During the experiment, 5 fish from each experimental pool (replicate) were weighed every 3 weeks to minimize disturbance to the fish and avoid possible negative effects on growth. Such control weight evaluations were necessary to calibrate the required amount of feed.

The weight evaluation and measurement data for control and study group at the end of the study are presented in Table 4.

Table 4. **Average data of weight evaluation and measurement for rainbow trout**

| Indicators | Control group (n=18) | Study group (n=18) |
|---|---|---|
| | Feed for rainbow trout without additives | Feed for rainbow trout is supplemented with c-phycocyanin |
| Fish weight (g) | 335.3$\pm$33[a] | 412.8$\pm$ 27[b] |
| Fish length (mm) | 287.7$\pm$6.8[a] | 324.2$\pm$ 18, 3[b] |
| Body length (mm) | 269.0$\pm$6.7[a] | 285.1$\pm$6.6[a] |
| Length of the head part (mm) | 57.9$\pm$1.5[a] | 59.4$\pm$1.5[a] |
| The length of the corpus (mm) | 138.4$\pm$4.0[a] | 147.7$\pm$3.2[a] |
| The length of the tail part (mm) | 75.6$\pm$2.3[a] | 80.5$\pm$2.0[a] |
| Body height (mm) | 71.0$\pm$ 2.5 | 123.9$\pm$ 43.9 |
| [a,b,] - means marked with different letters in the row were statistically significantly different (p<0.05; Fisher's LSD test) | | |

By analyzing data of weight evaluation and measurement of the fish, we notice (Table 4) that the addition of c-phycocyanin to extruded complete feed for rainbow trout had a positive effect on the growth of fish weight, fish and body length indicators, as well as the lengths of the head, corpus and tail part. The average weight of fish in the study group was 77.5 g higher than that of the control group (p<0.05). The average fish length of the study group was 36.5 mm greater than that of the control group. No statistically significant differences between the groups were found when evaluating the average lengths of body height (p>0.05).

Table 5. **Weight and exterior indexes of individual body parts of rainbow trout**

| Indicators | Control group (n=18) | Study group I (n=18) |
| | Feed for rainbow trout without additives | Feed for rainbow trout is supplemented with c-phycocyanin |
| --- | --- | --- |
| Body index | 93.5± 0.3 | 90.2± 2.6 |
| Head index | 21.5±0.2[a] | 20.9± 0, 2[b] |
| Corpus part index | 51.4± 0.4 | 51.9± 0.3 |
| Tail part index | 28.0± 0.3 | 28.3± 0.4 |
| [a, b, c] - means marked with different letters in the row were statistically significantly different ($p<0.05$; Fisher's LSD test) | | |

As we can see from the data presented in Table 5, the body mass indexes for all groups differ slightly between groups. The head index of study group I was 2.87 % lower than the control group ($p<0.05$). No statistically significant differences were found between the groups when evaluating body, corpus and tail indexes ($p>0.05$).

Table 6. **Effects of feed on meat coloration of rainbow trout**

| Color characteristic | Control group (n=18) | Study group (n=18) |
| | Feed for rainbow trout without additives | Feed for rainbow trout is supplemented with c-phycocyanin |
| --- | --- | --- |
| L* | 53.38±0.54[a] | 53.66±0.91[a] |
| a* | 8.84± 0.46 | 9.10± 0.53 |
| b* | 9.71±0.46[a] | 11.60± 0, 25[b] |
| L* - lightness of meat, a* - ratio of red and green color, b* - ratio of yellow and blue color; [a,b,] - means marked with different letters in the row were statistically significantly different ($p<0.05$; Fisher's LSD test) | | |

By evaluating the data presented in Table 6 on the color of rainbow trout meat, we notice that the addition of c-phycocyanin to extruded complete feed for rainbow trout had a negative effect on the ratio of yellow to blue color of fish meat. The ratio of yellow to blue color of the rainbow trout meat (b*) in the study group I was 19.46 % higher than the control group. When evaluating the ratio of red and green color of the meat, no statistically significant differences were found between the groups ($p>0.05$).

Table 7. **Effect of feed on physical properties of rainbow trout meat**

| Indicators | Control group (n=18) | Study group (n=18) |
| | Feed for rainbow trout without additives | Feed for rainbow trout is supplemented with c-phycocyanin |
| --- | --- | --- |
| Water content, % | 2.66±0.04[a] | 3.08±0.07[b] |
| Water viscosity, % | 62.73±0.46[a] | 63,23±0.29[a] |
| Cooking losses, % | 9.48±0.35[a] | 10,22±0.36[a] |
| [a,b] - means marked with different letters in the row were statistically significantly different ($p<0.05$; Fisher's LSD test) | | |

By evaluating the Table 7 data on physical properties of rainbow trout meat, we notice that the addition of c-phycocyanin to extruded complete feeds for rainbow trout negatively affected the percentage of water content of the meat. The water content in the meat of the study group was 0.42 % higher than the control group.

Table 8. **Effect of the feed on chemical properties of rainbow trout meat**

| Indicators | Control group (n=18) | Study group (n=18) |
|---|---|---|
| | Feed for rainbow trout without additives | Feed for rainbow trout is supplemented with c-phycocyanin |
| S. M., % | 32.41±0.27a | 31.73±0.22a |
| Proteins, % | 21.54±0.32a | 20.6± 0, 25b |
| Intermuscular fat, % | 9.17±0.37a | 9.33±0.41a |
| Ashes, % | 1.70± 0, 05ab | 1.80±0.03a |
| Hydrogen ion concentration, pH | 6.32± 0.04 | 6.32± 0.03 |

By analyzing the chemical composition data of rainbow trout meat, we notice (Table 8) that the addition of c-phycocyanin to extruded complete feed for rainbow trout had a negative effect on the protein percentage of fish meat, which was 0.94 % lower than the control group (p<0.05).

Table 9. **Effect of the feed on fatty acid concentration in rainbow trout meat, %**

| Fatty acid | Control group (n=18) | Study group (n=18) |
|---|---|---|
| | Feed for rainbow trout without additives | Feed for rainbow trout is supplemented with c-phycocyanin |
| C 14:0 Mvristic acid | 1.866±0.053a | 1.781±0.040a |
| C 16:0 Palmitic acid | 14.826±0.131a | 15.201±0.068b |
| C 16:1 Hexadecanoic | 3.947±0.126a | 4.301±0.070b |
| C 18:0 Stearic acid | 3.541±0.058a | 3.299±0.028b |
| C 18:1 Olein acid | 44.640±0.096a | 41.344±0.144b |
| C 18:2 Linoleum acid | 14.344±0.113* | 15.881±0.063b |
| C 18:3 α Alpha-linolenic | 2.781±0.030a | 3.110±0.028b |
| C20:1 Eicosenoic acid | 3.316±0.032a | 2.988±0.032b |
| C20:2 Eicosadiene acid | 0.939±0.014a | 1.057±0.012b |
| C20:3 Eicosatriene acid | 0.832±0.024a | 0.781 ±0.031a |
| C20:4 Arachidonic acid | 0.608±0.026a | 0.543±0.022a |
| C20:5 Eicosapentaenoic | 0.835±0.016a | 1.343±0.028b |
| C22:1 Docosenoic acid | 1.339±0.024a | 1.279+0.010b |
| C22:6 Docosahexaenoic | 6.424±0.199a | 7.690±0.136b |
| ∑SRR | 20.252±0.228a | 20.280±0.093a |
| ∑MNRR | 53.241 ±0.114a | 49.913±0.137b |
| ∑PNRR | 26.506±0.305a | 29.808±0.185b |
| ∑omega 3 | 10.040±0.214a | 12.142±0.152b |
| ∑omega 6 | 16.466±0.115a | 17.665±0.144b |
| a b - means marked with different letters in the row were statistically significantly different (p<0.05; Fisher's LSD test) | | |

When evaluating the effect of feed on the concentration of fatty acids in rainbow trout meat, we note (Table 9) that the addition of phycocyanin to extruded complete feed for rainbow trout had a positive effect on the synthesis of polyunsaturated, omega-3 and omega-6 fatty acids, but had a negative effect on the formation of monounsaturated fatty acids in the fish. In the study group, the amount of C16:0 palmitic acid was 0.375 % higher compared to the control group (p<0.05). In the study group, the amount of C16:1 hexadecanoic acid 14 was 0.354 % higher than in the control group (p<0.05). In the study group, the amount of C18:0 stearic acid was 0.242 % lower than in the control group (p<0.05). In the study group, the amount of C18:1 oleic acid was 3.296 % lower than in the control group (p<0.05). In the study group, the content of C18:2 linoleic acid was 1.537 % higher than in the control group (p<0.05). In the study group, the content of C18:3 α Alpha-linolenic acid was 0.329 % higher compared to the control group (p<0.05). The C20:1 eicosenoic acid content of the study group was 0.328 % lower than in the control (p<0.05).

In study group I, the content of C20:5 eicosapentaenoic acid was 0.508 % higher than in the control group (p<0.05). In the study group, the amount of C22:1 docosenoic acid was 0.06 % lower than in the control group (p<0.05). The amount of monounsaturated fatty acids in the study group was 3.328 % lower compared to the control group (p<0.05). The amount of polyunsaturated fatty acids in the study group was 3.302 % higher than in the control group (p<0.05). The amount of omega-3 fatty acids in the study group was 2.102 % higher compared to the control group (p<0.05). The amount of omega-6 fatty acids in study group I was 1.199 % higher than in the control group (p<0.05).

Table 10. **Effect of feed on the length of intestinal villi of rainbow trout**

| Indicators | Control group (n=18) | Study group (n=18) |
|---|---|---|
| | Feed for rainbow trout without additives | Feed for rainbow trout is supplemented with c-phycocyanin |
| The length of the villi, $\mu$m | 700.7$\pm$16.4a | 769.3$\pm$23.5a |
| a, b - *means marked with different letters in the row were statistically significantly different (p<0.05; Fisher's LSD test)* | | |

By evaluating the effect of feed on the length of intestinal villi of rainbow trout (Table 10), we notice that the addition of c-phycocyanin to complete feed recipes had a positive effect on the development of villi. In the study group, the average length of the intestinal villi was 68.6 micrometers longer compared to the control group, but it was not statistically significantly different from the control group.

Results of the experiment on African catfish

On the first day of the growing experiment, the average body weight (value $\pm$ SD) of the control group fish was 143.0 $\pm$ 37 g, and at the end of the growing experiment the average body weight of the control group fish was 223.0 $\pm$ 9.47 g (p<0.05). The average weight of the fish of the c-phycocyanin-group on the first day of the growing experiment was 143.3 $\pm$ 28 g, and at the end of the growing experiment the average weight of the fish of the c-phycocyanin-group was 251.3 $\pm$ 12.7 g (p<0.05).

During the experiment, 5 fish from each experimental pool (replicate) were weighed every 3 weeks to minimize disturbance to the fish and avoid possible negative effects on the growth. Such control weight evaluations were necessary to calibrate the required amount of feed.

The control and study group weighing and measurement data at the end of the study are presented in Table 11.

Table 11. **Average African catfish weights and measurements**

| Indicators | Control group (n=6) | Study group (n=6) |
|---|---|---|
| | Feed for African catfish without additives | Feed for African catfish is supplemented with c-phycocyanin |
| Fish length, mm | 314.7$\pm$6.21 | 317.3$\pm$6.15 |
| Body length, mm | 285.3$\pm$8.12 | 293.8$\pm$6.98 |
| The length of the head part, | 77.5$\pm$3.67 | 81.3$\pm$1.87 |
| The length of the torso part, | 81.3$\pm$3.52 | 80.2$\pm$1.85 |
| The length of the tail part, mm | 127.2$\pm$2.75 | 126.8$\pm$2.14 |
| Body height, mm | 57.5$\pm$1.69b | 65.2$\pm$1.66a |
| Fish weight, g | 336.3$\pm$18.28b | 401.5$\pm$24.49a |
| Head weight, g | 102.3$\pm$5.41b | 112.5$\pm$6.55a |

(continued)

| Indicators | Control group (n=6) | Study group (n=6) |
|---|---|---|
| | Feed for African catfish without additives | Feed for African catfish is supplemented with c-phycocyanin |
| Weight of internal organs, g | $23.0 \pm 2.97$ | $24.7 \pm 2.88$ |
| [a,b] - means marked with different letters in the row were statistically significantly different ($p<0.05$; Fisher's LSD test) | | |

By analyzing the data of weighing and measuring fish, we notice (Table 11) that the addition of c-phycocyanin to the extruded complete feeds for African catfish had a positive effect on the body height, total weight and head weight of the fish. The mean fish body height of the study group was 7.7 mm higher than that of the control group when compared to the control group ($p<0.05$). The average weight of fish in the study group was 65.2 g higher than that of the control group ($p<0.05$). Based on the weighing and measurement data, we can see that the average head weight of African catfish in the research group was 10.2 g higher compared to the control group ($p<0.05$). When evaluating the average lengths of the fish, body, head part, torso part, tail part, as well as the weights of internal organs, no statistically significant differences were found between the groups ($p>0.05$).

Table 12. **Weight and exterior indexes of individual body parts of African catfish**

| Indicators | Control group (n=6) | Study group (n=6) |
|---|---|---|
| | Feed for African catfish without additives | Feed for African catfish is supplemented with c-phycocyanin |
| Body index | $90.6 \pm 1.47$ | $92.6 \pm 0.84$ |
| Head index | $27.2 \pm 1.19$ | $27.7 \pm 0.76$ |
| Head weight index | $30.4 \pm 0.53$[a] | $28.1 \pm 0.82$[b] |
| Belly weight index | $6.8 \pm 0.67$ | $6.1 \pm 0.56$ |
| Torso part index | $28.6 \pm 1.28$ | $27.3 \pm 0.65$ |
| Tail part index | $44.7 \pm 1.05$ | $43.3 \pm 1.22$ |
| [a,b] - means marked with different letters in the row were statistically significantly different ($p<0.05$; Fisher's LSD test) | | |

As we can see from the data presented in Table 12, the differences in the results of all the groups are very insignificant. The head weight index of the study group was 8.19 % lower than the control group ($p<0.05$). No statistically significant differences were found between the groups when evaluating the indexes of body, head, belly weight, torso and tail parts ($p>0.05$).

Table 13. **Effects of feed on meat coloration of African catfish**

| Color characteristic | Control group (n=6) | Study group (n=6) |
|---|---|---|
| | Feed for African catfish without additives | Feed for African catfish is supplemented with c-phycocyanin |
| L* | $50.99 \pm 1.77$ | $48.92 \pm 0.83$ |
| a* | $8.28 \pm 0.57$ | $9.73 \pm 0.79$ |
| b* | $7.17 \pm 0.55$ | $6.87 \pm 0.27$ |
| L* - lightness of meat, a* - ratio of red to green color, b* - ratio of yellow to blue color [a,b] - means marked with different letters in the row were statistically significantly different ($p<0.05$; Fisher's LSD test) | | |

When evaluating the data presented in Table 13 on the color of African catfish meat, we notice that no statistically significant differences between the groups were found ($p>0.05$).

Table 14. **Effect of feed on physical properties of African catfish meat**

| Indicators | Control group (n=6) | Study group (n=6) |
| --- | --- | --- |
| | Feed for African catfish without additives | Feed for African catfish is supplemented with c-phycocyanin |
| Water content, % | $3.59 \pm 0.18^a$ | $4.72 \pm 0.27^b$ |
| Water viscosity, % | $59.40 \pm 0.50$ | $60.01 \pm 0.87$ |
| Cooking losses, % | $12.46 \pm 0.26^a$ | $11.36 \pm 0.14^b$ |
| $^{a,b}$ - means marked with different letters in the row were statistically significantly different (p<0.05; Fisher's LSD test) | | |

When evaluating the physical properties data of African catfish meat shown in Table 14, we notice that the addition of c-phycocyanin to extruded complete feeds for African catfish negatively affected the percentage of water content of the meat. The water content in the meat of the study group was 1.13 % higher than the control group (p<0.05). The cooking loss of the study group was 1.1 % lower than the control group (p<0.05). No statistically reliable data were found when analyzing water viscosity (p>0.05).

Table 15. **Effect of feed on chemical properties of African catfish meat**

| Indicators | Control group (n=6) | Study group (n=6) |
| --- | --- | --- |
| | Feed for African catfish without additives | Feed for African catfish is supplemented with c-phycocyanin |
| S. M., % | $29.03 \pm 0.44^a$ | $29.08 \pm 0.36^a$ |
| Proteins, % | $14.21 \pm 0.87^{ab}$ | $15.82 \pm 0.17^a$ |
| Intermuscular fat, % | $13.85 \pm 0.50^a$ | $12.19 \pm 0.32^b$ |
| Ashes, % | $0.98 \pm 0.01^*$ | $1.06 \pm 0.01^b$ |
| Hydrogen ion concentration, pH | $6.42 \pm 0.11$ | $6.31 \pm 0.08$ |
| $^{a,b}$ - means marked with different letters in the row were statistically significantly different (p<0.05; Fisher's LSD test) | | |

When analyzing the results of chemical tests (Table 15), we notice that the addition of c-phycocyanin to extruded complete feeds for African catfish had a positive effect on the percentage of dry matter in catfish meat. The amount of protein in the study group was 1.61 % higher than in the control group (p<0.05). The amount of intermuscular fat in the study group was 1.66 % lower compared to the control group (p<0.05). The amount of ash in the meat of African catfish in the study group was 0.08 % higher than in the control group (p<0.05). When analyzing the pH value, no significant differences were found between the groups (p>0.05).

Table 16. **Effect of feed on fatty acid concentration in African catfish meat, %**

| Fatty acid | Control group (n=6) | Study group (n=6) |
| --- | --- | --- |
| | Feed for African catfish without additives | Feed for African catfish is supplemented with c-phycocyanin |
| C 14:0 Mvristic acid | $2.33 \pm 0.10^a$ | $2.61 \pm 0.04^b$ |
| C 16:0 Palmitic acid | $18.12 \pm 0.21^a$ | $20.43 \pm 0.13^b$ |
| C 16:1 Hexadecanoic acid | $4.46 \pm 0.15^a$ | $4.92 \pm 0.11^b$ |
| C 18:0 Stearic acid | $3.75 \pm 0.10^a$ | $4.20 \pm 0.04^b$ |
| C 18:1 Olein acid | $36.51 \pm 0.20^a$ | $33.99 \pm 0.20^b$ |
| C 18:2 Linoleum acid | $17.99 \pm 0.21^a$ | $16.2 \pm 0.20^b$ |
| C 18:3 $\gamma$ beta-linolenic acid | $1.07 \pm 0.05^a$ | $1.30 \pm 0.06^b$ |
| C 18:3 $\alpha$ Alpha-linolenic acid | $3.37 \pm 0.05^a$ | $2.72 + 0.03^b$ |

(continued)

| Fatty acid | Control group (n=6) | Study group (n=6) |
|---|---|---|
| | Feed for African catfish without additives | Feed for African catfish is supplemented with c-phycocyanin |
| C20:0 Arachidic acid | - | 0.17±0.00 |
| C20:1 Eicosenoic acid | 2.87±0.02 | 2.89±0.02 |
| C20:2 Eicosadiene acid | 0.63±0.01[a] | 0.58±0.01[b] |
| C20:3 Eicosatriene acid | 0.95±0.03[a] | 1.00±0.02[b] |
| C20:4 Arachidonic acid | 0.59±0.02[a] | 0.71±0.02[b] |
| C20:5 Eicosapentaenoic acid | 1.44±0.05[a] | 1.60±0.02[b] |
| C22:1 Docosenoic acid | 1.39±0.01[a] | 1.51±0.02[b] |
| C22:6 Docosahexaenoic acid | 4.54±0.06[a] | 5.30±0.08[b] |
| ΣSRR | 24.20±0.26[a] | 27.3±0.15[b] |
| ΣMNRR | 45.22±0.15[a] | 43.31±0.29[b] |
| ΣPNRR | 30.58±0.18[a] | 29.39±0.27[b] |
| Σomega 3 | 9.34±0.08[a] | 9.61±0.10[a] |
| Σomega 6 | 21.23±0.17[a] | 19.78±0.18[b] |
| Σomega 9 | 45.22±0.15[a] | 43.31±0.29[b] |
| [a,b] - means marked with different letters in the row were statistically significantly different ($p<0.05$; Fisher's LSD test) | | |

When evaluating the effect of feed on fatty acids in African catfish meat (Table 16), we notice that the addition of c-phycocyanin to extruded complete feed for African catfish had a negative effect on the amount of monounsaturated and polyunsaturated fatty acids in the meat, but had a positive effect on the amount of saturated fatty acids. Myristic fatty acid C14:0 was 0.28 percent higher in the study group compared to the control group. In the C16:0 palmitic fatty acid study group, it was 2.31 % higher compared to the control ($p<0.05$). In the study group C16:1 hexadecane was 0.46 % more than in the control group ($p<0.05$). After adding c-phycocyanin to the feed, the amount of C18:0 stearic fatty acid in the study group was 0.45 percent higher than in the control group ($p<0.05$). The amount of C18:1 oleic fatty acid in the study group was 2.52 percent lower compared to the control group ($p<0.05$). The content of C18:2 linoleic fatty acid in the study group was 1.79 percent lower compared to the control group ($p<0.05$). The amount of C18:3 γ beta-linolenic fatty acid in the study group was 0.23 % higher compared to the control group ($p<0.05$). C18:3 α alpha-linolenic fatty acid in the catfish meat of the study group was 0.65% less compared to the control group ($p<0.05$). C20:0 arachidonic fatty acid was found only in the meat of African catfish that were fed with c-phycocyanin feed ($p>0.05$). C20:2 eicosadiene fatty acid detected in the study group was 0.05% less than in the control group ($p<0.05$). C20:4 arachidonic fatty acid in the study group was 0.12 % more than in the control group ($p<0.05$). C20:5 eicosapentaenoic fatty acid in the study group was 0.16 percent more ($p<0.05$). The content of C22:1 docosene fatty acid in the study group was 0.12 % higher than the control group ($p<0.05$). C22:6 docosahexaenoic fatty acid was 0.76 % more compared to the control group ($p<0.05$). Σomega 6 fatty acid in the study group was 1.45 % less than in the control group. Σomega 9 fatty acid in the study group was 1.91% less compared to the control group ($p<0.05$).

Table 17. **Effect of feed on the length of intestinal villi of African catfish**

| Indicators | Control group (n=6) | Study group (n=6) |
|---|---|---|
| | Feed for African catfish without additives | Feed for African catfish is supplemented with c-phycocyanin |
| The length of the villi, μm | 929.35±27.24[a] | 1338.13±71.49[b] |
| [a,b] - means marked with different letters in the row were statistically significantly different ($p<0.05$; Fisher's LSD test) | | |

When evaluating the effect of feed on the length of villi in the intestines of African catfish (Table 17), we notice that the addition of c-phycocyanin to complete feed recipes had a positive effect on the average length of the villi (study group). The average length of intestinal villi in the study group was 408.78 micrometers higher compared to the control group (p<0.05).

These experiments showed that fish fed with c-phycocyanin-enriched feed grew and developed faster compared to the control fish. Feeding with additive-supplemented feed had no significant effect on the majority of fish body indexes, but it was observed that the head index of rainbow trout and African catfish fed with c-phycocyanin-enriched feed was lower compared to the control group (p<0.05).

Addition of c-phycocyanin to extruded complete feeds for rainbow trout had a negative effect on the yellow-to-blue color ratio of fish meat. Meanwhile, when evaluating the results of the African catfish feeding experiment, we noticed that feeding fish with c-phycocyanin additives did not have a statistically significant effect on the color of the meat (p>0.05). It was found that the addition of c-phycocyanin to extruded complete feeds for rainbow trout and African catfish had a negative effect on the percentage of water content of the meat (p<0.05).

The obtained results showed that the addition of c-phycocyanin to the extruded complete feed for rainbow trout had a negative effect on the protein percentage of fish meat (p<0.05). However, the inclusion of c-phycocyanin in extruded complete feed for African catfish had a positive effect on the protein content in the meat, but negatively on the intramuscular fat content (p<0.05).

It was found that adding c-phycocyanin to the extruded complete feeds for rainbow trout had a positive effect on the synthesis of polyunsaturated, omega-3 and omega-6 fatty acids, but negatively affected the formation of monounsaturated fatty acids in the fish (p<0.05). When feeding fish with feed supplemented with c-phycocyanin additives, a slight, but statistically significantly lower amount of PNRR was found compared to the control group (p<0.05). According to the data of our study, adding c-phycocyanin to the feed had a positive effect on the synthesis of eicosapentaenoic and docosahexaenoic fatty acids in the meat of both African catfish and rainbow trout (p<0.05).

The inclusion of c-phycocyanin in complete feed formulations had a positive effect on the development of intestinal villi of rainbow trout (p<0.05). In the African catfish feeding experiment, c-phycocyanin supplementation had a positive effect on the development of intestinal villi (p<0.05).

*Morphophysiological indicators*

On the first day of the growing experiment, the mean body weight (value $\pm$ SD) of control group fish was 152.3 $\pm$ 53 g and the mean length (value $\pm$ SD) was 21.0 $\pm$ 2.8 cm. At the end of the growing experiment, the average body weight of the fish in the control group was 250.0 $\pm$ 104 g, and the average length was 26.9 $\pm$ 3.3 cm. The average body weight of fish in the c-phycocyanin group on the first day of the growing experiment was 153.3 $\pm$ 46 g, and the average length was 21.4 $\pm$ 2.5 cm. At the end of the growing experiment, the fish in the c-phycocyanin-group had an average weight of 426.7 $\pm$ 164 g and an average length of 30.9 $\pm$ 3.9 cm.

During the experiment, 5 fish from each experimental pool (replicate) were weighed every 3 weeks to minimize disturbance to the fish and avoid possible negative effects on the growth. Such control weight evaluations were necessary to calibrate the required amount of feed.

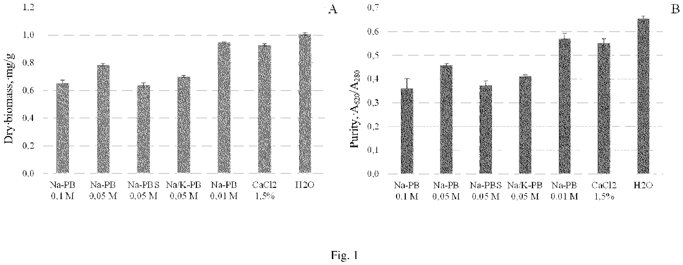

Research results showed that fish nutrition can have a significant impact on their body condition and health (Figure 1). It was found that fish fed with c-phycocyanin-enriched feed had statistically significantly higher condition factor (H = 17.09, 2 d f., p = 0.0002) and liver somatic index (H = 26.10, 2 d f., p < 0.001), compared to the control (p < 0.01). Meanwhile, gill somatic index was statistically significantly (H = 16.96, 2 d. f., p = 0.0002) lower in fish fed with c-phycocyanin-enriched feed compared to the control (p = 0.006). The results of the study also showed that fish feed of different composition did not have a significant effect on the changes in the somatic indexes of fish kidneys (H = 1.99, 2 d f., p = 0.37).

*Intestinal microbiota*

Alpha and beta diversity and taxonomic composition of rainbow trout *(Oncorhynchus mykiss)* intestinal microbiota were evaluated after 18 weeks of feeding with c-phycocyanin (PC)-enriched feed, including comparison to control (Control).

While making sequencing, 8209724 raw sequences were read from fish intestinal microbiota samples, and after quality filtering, 3758983 good quality sequences were used for further analysis.

Rarefaction curves were used to evaluate the saturation of the obtained ASVs. The resulting curves (Appendix Figure 1) showed that the sampling depth had reached saturation.

The following indexes of alpha diversity were evaluated in this study: Chao1 richness, Shannon and Simpson diversity indexes. The Chao1 index estimates the total number of species in the sample. The Shannon index combines richness and evenness of species, and gives more weight to rare species. Simpson diversity index is a measure of diversity that takes into account the number of species present and the relative abundance of each of species. It focuses more on common species. After 18 weeks of feeding the trout with c-phycocyanin-enriched feed, the Chao1 index was increasing and decreasing ($105.5 \pm 22.22$), but this fluctuation was not statistically significant ($H = 8.93$, 2 d.f., $p = 0.012$) compared to the control ($127.00 \pm 18.05$) ($p > 0.05$) (Figure 2A). The Shannon ($H = 18.035$, 2 d. f., $p = 0.018$) and Simpson ($H = 5.67$, 2 d. f., $p = 0.059$) diversity indexes for the trout fed the c-phycocyanin-enriched diets were also not statistically significantly different from the control ($p > 0.05$) (Figure 2B-C).

Beta diversity was assessed by using Principal Coordinates Analysis (PCoA) based on differences in the abundance of Bray-Curtis ASVs between the studied groups ($F = -4.464$, $p = 0.869$). PCoA showed significant differences only between the control and Cladophora groups ($p = 0.037$, one-way PERMANOVA) (Fig. 2D).

Taxonomic studies of intestinal microbiota showed that *Proteobacteria, Actinobacteria* and *Firmicutes* bacteria types dominated in rainbow trout (*O. mykiss*) in all studied fish groups, which accounted for 90.5% to 97.0% of all bacteria (Table 18 a.). At the class taxon level, *Betaproteobacteria* and *Actinobacteria* had the highest relative abundance in all studied groups, but *Gammaproteobacteria* (28.7% and 24.5%, respectively) were also abundantly found in fish fed with c-phycocyanin-enriched feed, with only 6.0% in the control (18 table b.). *Burkholderiales, Micrococcales, Bacillales* bacteria prevailed in all studied groups of ordinal level taxons, but their relative abundance differed. In the control, *Burkholderiales* (35.0%) and *Micrococcales* (29.4%) prevailed, and in the microbiota of the fish fed with c-phycocyanin-enriched feed, *Bacillales* (14.7%) were found to be more abundant than in the control (4.10%) (Table 18 c.). Similar differences were also found at the family taxonomic level. *Burkholderiaceae* (35.0%) and *Microbacteriaceae* (29.2%) predominated in the control samples, while *Shewanellaceae* (20.95%) had a higher relative abundance in the 'c-phycocyanin' group than in the control group. The 'c-phycocyanin' group was distinguished by a higher relative abundance of *Bacillaceae* (14.13%) compared to the control (2.8%) (Table 18 d).

The LEfSe algorithm shows significant taxonomic differences in the relative abundance of intestinal microbiota in the studied fish groups. In the control and c-phycocyanin groups, 10 phylotypes with significantly different relative abundances were identified (Fig. 4A). Compared to the control, in the 'c-phycocyanin' group there was a significant decrease of the *Cyanobacteria* (6.1% and 1.8% respectively), *Deltaproteobacteria* (0.3% and 0% respectively), unclassified *Bacillus* (0.42% and 0% respectively), *Streptococcus* (0 .25% and 0% respectively), and *Aneurinibacillus* (0.77% and 0.15% respectively), but there was a significant increase in *Caulobacterales* (0% and 0.2% respectively), *Caulobacteraceae* (0.02% and 0.2 %, respectively), *Brevundimonas* (0% and 0.12%, respectively), and bacteria of the genus *Bacillus (B. aquimaris* 0% and 12.1% and *B. cereus* 0% and 1.87%, respectively). The cladogram derived from LEfSe analysis of differential intestinal microbial taxons showed differences in the studied fish groups (Fig. 4B). However, of the above-mentioned phylotypes, only bacteria from the genera *Cyanobacteria* and *Bacillus (B. aquimaris* and *B. cereus*) accounted for >1% of the relative abundance of the microbiota. Other mentioned phylotypes accounted for < 1 %.

Table 18. *Changes in the microbiota of the studied living organisms*

a. Phyllum

| | *Planctomycetes* | *Saccharibacteria* | *Bacteroidetes* | *Chlamydiae* | *Cyanobacteria* | *Firmicutes* | *Actinobacteria* | *Proteobacteria* | *Other* |
|---|---|---|---|---|---|---|---|---|---|
| Control | 10.00% | 0.30% | 0.40% | 0.50% | 6.10% | 11.60% | 33.20% | 46.10% | 1.90% |
| C-phycocyanin | 0.10% | 0.50% | 0.20% | 0.10% | 1.80% | 23.90% | 20.80% | 52.30% | 0.40% |

b. Class

| | *Erysipelotrichia* | *Planctomycetacia* | *Bacteroidia* | *Flavobacteriia* | *Unclassified_Saccharibacteria* | *Deltaproteobacteria* | *Chlamydiae* | *Thermoleophilia* | *Clostridia* | *Gammaproteobacteria* | *Alphaproteobacteria* | *Bacilli* | *Betaproteobacteria* | *Actinobacteria* | *Other* |
|---|---|---|---|---|---|---|---|---|---|---|---|---|---|---|---|
| Control | 0% | 0.10% | 0.20% | 0.30% | 0.30% | 0.30% | 0.30% | 0.50% | 3.98% | 6% | 5.20% | 7.50% | 35.30% | 32.55% | 7.57% |
| C-phycocyanin | 6.70% | 0.10% | 0% | 0.10% | 0.50% | 0% | 0.05% | 0% | 1.10% | 28.70% | 1.30% | 16% | 22.2% | 20.8% | 2.45% |

c. Order

| | *Erysipelotrichia* | *Planctomycetacia* | *Bacteroidia* | *Flavobacteriia* | *Unclassified_Saccharibacteria* | *Deltaproteobacteria* | *Chlamydiae* | *Thermoleophilia* | *Clostridia* | *Gammaproteobacteria* | *Alphaproteobacteria* | *Bacilli* | *Betaproteobacteria* | *Actinobacteria* | *Other* |
|---|---|---|---|---|---|---|---|---|---|---|---|---|---|---|---|
| Control | 0% | 0.10% | 0.20% | 0.30% | 0.30% | 0.30% | 0.30% | 0.50% | 3.98% | 6% | 5.20% | 7.50% | 35.30% | 32.55% | 7.57% |
| C-phycocyanin | 6.70% | 0.10% | 0% | 0.10% | 0.50% | 0% | 0.05% | 0% | 1.10% | 28.70% | 1.30% | 16% | 22.2% | 20.8% | 2.45% |

### d. Family

| | Erysipelotrichaceae | Micrococcaceae | Caulobacteraceae | Staphylococcaceae | Planococcaceae | Sphingomonadaceae | o_Bacillales; f_Family XII | Enterobacteriaceae | Pseudomonadaceae | Shewanellaceae | Aeromonadaceae | Streptococcaceae |
|---|---|---|---|---|---|---|---|---|---|---|---|---|
| Control | 0% | 0.00 % | 0.02 % | 0.03 % | 0.13 % | 0.12 % | 0.20 % | 0.40 % | 0.63 % | 0.85 % | 0.88 % | 0.95 % |
| C-phycocyanin | 6.68 % | 0.03 % | 0.17 % | 0.03 % | 0.00 % | 0.08 % | 0.25 % | 0.43 % | 0.17 % | 20.95 % | 5.87 % | 0.77 % |

| (Continued) | Shewanellaceae | Aeromonadaceae | Streptococcaceae | Paenibacillaceae | Shewanellaceae | Aeromonadaceae | Streptococcaceae | Paenibacillaceae | Shewanellaceae | Aeromonadaceae | Streptococcaceae | Shewanellaceae |
|---|---|---|---|---|---|---|---|---|---|---|---|---|
| Control | 0.85 % | 0.88 % | 0.95 % | 1.10 % | 0.85 % | 0.88 % | 0.95 % | 1.10 % | 0.85 % | 0.88 % | 0.95 % | 0.85 % |
| C-phycocyanin | 20.95 % | 5.87 % | 0.77 % | 0.25 % | 20.95 % | 5.87 % | 0.77 % | 0.25 % | 20.95 % | 5.87 % | 0.77 % | 20.95 % |

References:

1. Khazi MI, Demirel Z, Conk Dalay M. Enhancement of biomass and phycocyanin content of Spirulina platensis. Front Biosci (Elite Ed). 2018 Jan 1; 10:276-286. doi: 10.2741/e822.

2. Horváth H., Kovács A.W., Riddick C., Présing M., 2013. Extraction methods for phycocyanin determination in freshwater filamentous cyanobacteria and their application in a shallow lake. European Journal of Phycology, 48(3): 278-286.Julianti E., Susanti M.S., Mulyani L.N., 2019. Optimization of extraction method and characterization of phycocyanin pigment from Spirulina platensis. Journal of Mathematical and Fundamental Sciences, 51(2): 168-176.

3. Verdile N, Pasquariello R, Scolari M, Scirè G, Brevini TAL, Gandolfi F. A Detailed Study of Rainbow Trout (Onchorhynchus mykiss) Intestine Revealed That Digestive and Absorptive Functions Are Not Linearly Distributed along Its Length. Animals (Basel). 2020;10(4):745. Published 2020 Apr 24.

4. Asgari M, Abedian Kenari A, Esmaeili M, Rombenso A. Effects of hydroalcoholic extract of honeybee pollen on growth performance, flesh quality, and immune and stress response response of rainbow trout (Oncorhynchus mykiss). Aquacult. Nutr., 26. 2020; p. 1505 - 1519.

5. Ghosi Mobaraki MR, Abedian Kenari A, Bahrami Gorji S, Esmaeili M. Effect of dietary fish and vegetable oil on the growth performance, body composition, fatty acids profile, reproductive performance and larval resistance in pearl gourami (Trichogaster leeri). Aquacult. Nutr., 26. 2020; p. 894 - 907.

6. Van de Vis H, Kiessling A, Flik G, Mackenzie S. Welfare of farmed fish in present and future production systems; 2012.

7. Yengkokpam, Sona & Debnath, Dipesh. Nutrition and feed technology for producing healthy fish through aquaculture; 2016.

8. Sogbesan OA, Ugwumba AAA. (2006). Bionomics evaluations of garden snail (Limicolaria Aurora Jay) meat meal in the diet of Clariasgariepinus fingerlings. Nigeria J. of Fisheries, 2-3(2). 2006; p. 358-371.

9. Zhou C, Xu D, Lin K, Sun C, Yang X. Intelligent feeding control methods in aquaculture with an emphasis on fish: a review. Rev. Aquae., 10. 2018; p. 975 - 993.

10. Wu TH, Huang YI, Chen JM. Development of an adaptive neural-based fuzzy inference system for feeding decision-making assessment in silver perch (Bidyanus bidyanus) culture. Aquae. Eng., 66. 2015; p. 41- 51.

11. Aquafeed Formulation 1st Edition - October 9, 2015 Editor: Sergio F Nates Hardback ISBN: 9780128009956.

12. Craig, S., Kuhn, D., & Schwarz, M. (2017). Understanding Fish Nutrition, Feeds, and Feeding. Virginia Cooperative Extention, (Publication 420-256), 1-6.

13. Introduction to fish nutrition. C. D. Webster, Aquaculture Research Center Kentucky State University Frankfort KY 40601 USA and C. Lim. ISBN (ePDF): 978-0-85199-702.

14.. Tocher DR. Omega-3 long-chain polyunsaturated fatty acids and aquaculture in perspective. Aquaculture. 2015; 449:94-107.

15. Abbasi, A, Oujifard, A, Torfi Mozanzadeh, M, Habibi, H, Nafisi Bahabadi, M. Dietary simultaneous replacement of fish meal and fish oil with blends of plant proteins and vegetable oils in yellowfin seabream (Acanthopagrus latus) fry: Growth, digestive enzymes, antioxidant status and skin mucosal immunity. Aquacult Nutr. 2020; 26: 1131-1142.

16. Clarissa Vilela Figueiredo da Silva Campos, Laenne Barbara Silva de Moraes, Renata da Silva Farias, William Severi, Luis Otavio Brito & Alfredo Olivera Gálvez (2019) Phytoplankton communities in aquaculture system (integration of shrimp and seaweed), Chemistry and Ecology, 35:10, 903-921.

17. Serradell A, Torrecillas S, Makol A, Valdenegro V, Fernández-Montero A, Acosta F, Izquierdo MS, Montero D. Prebiotics and phytogenics functional additives in low fish meal and fish oil based diets for European sea bass (Dicentrarchus labrax): Effects on stress and immune responses. Fish Shellfish Immunol. 2020 May;100:219-229.

18. Prabu, E. S. (2017). An Overview On Significance Of Fish Nutrition In Aquaculture Industry . Journal of Fisheries And Aquatic Studies, Vol. 5, 6, 349-355

19. Kamalam, B.S., Medale, F., Panserat, S., 2017. Utilisation of dietary carbohydrates in farmed fishes: new insights on influencing factors, biological limitations and future strategies. Aquaculture 467, 3-27.

20. Tsao, Constance S. "An overview of ascorbic acid chemistry and biochemistry." Vitamin C in health and disease. (1997): 25-58.

21. Trichet, Viviane Verlhac. "Nutrition and immunity: an update." Aquaculture research 41.3 (2010): 356-372.

22. Lukaszewicz, Marcin, et al. "Antioxidant capacity manipulation in transgenic potato tuber by changes in phenolic compounds content." Journal of Agricultural and Food Chemistry 52.6 (2004): 1526-1533.

23. Trushenski, Jesse T., Craig S. Kasper, and Christopher C. Kohler. "Challenges and opportunities in finfish nutrition." North American Journal of Aquaculture 68.2 (2006): 122-140.

24. Froehlich, Halley E., et al. "Comparative terrestrial feed and land use of an aquaculture-dominant world." Proceedings of the National Academy of Sciences 115.20 (2018): 5295-5300.

25. Barragan-Fonseca, Karol B., Marcel Dicke, and Joop JA van Loon. "Nutritional value of the black soldier fly (Hermetia illucens L.) and its suitability as animal feed-a review." Journal of Insects as Food and Feed 3.2 (2017): 105-120.

26. Naiel, Mohammed AE, Nahla EM Ismael, and Sabry A. Shehata. "Ameliorative effect of diets supplemented with rosemary (Rosmarinus officinalis) on aflatoxin B1 toxicity in terms of the performance, liver histopathology, immunity and antioxidant activity of Nile Tilapia (Oreochromis niloticus)." Aquaculture 511 (2019): 734264.

27. Hassaan, Mohamed S., et al. "Eubiotic effect of a dietary potassium diformate (KDF) and probiotic (Lactobacillus acidophilus) on growth, hemato-biochemical indices, antioxidant status and intestinal functional topography of cultured Nile tilapia Oreochromis niloticus fed diet free fishmeal." Aquaculture 533 (2021): 736147.

28. Julianti E., Susanti M.S., Mulyani L.N., 2019. Optimization of extraction method and characterization of phycocyanin pigment from Spirulina platensis. Journal of Mathematical and Fundamental Sciences, 51(2): 168-176.

## Claims

1. A fish feed additive comprising c-phycocyanin.

2. The fish feed additive according to claim 1, **characterized in that** c-phycocyanin is isolated.

3. The fish feed additive according to claim 1 or 2, **characterized in that** c-phycocyanin is in oil suspension.

4. The fish feed additive according to any one of the preceding claims, **characterized in that** the c-phycocyanin is isolated from cyanobacteria.

5. The fish feed additive according to any one of the preceding claims, **characterized in that** c-phycocyanin is isolated from biomass of *Microcystis* (microalgae) and/or *Aphanizomenon* genera.

6. The fish feed additive according to claim 5, **characterized in that** c-phycocyanin is isolated from biomass of *Aphanizomenon flos-aquae.*

7. The fish feed additive according to any one of the preceding claims, wherein the concentration of c-phycocyanin in the suspension is from 0.001% to 89% (w/w).

8. The fish feed additive according to claim 7, **characterized in that** the concentration of c-phycocyanin in the suspension is 0.1% (w/w).

9. Use of the fish feed additive according to any one of the preceding claims to improve the nutritional properties of fish feed.

10. A fish feed comprising the fish feed additive according to any one of claims 1 to 8.

11. The fish feed according to claim 10, comprising from $1*10^{-6}$ % to $8.9*10^{-2}$ % (w/w) of c-phycocyanin concentration in the feed.

12. The fish feed according to claim 11, **characterized in that** the concentration of c-phycocyanin is $1* 10^{-4}$ % (w/w).

13. Use of the fish feed according to any one of claims 10 to 12 for fish feeding.

14. The fish feed additive according to anyone of claims 1 to 8 or the fish feed according to claims 10 to 12, wherein the fish are rainbow trout *(Oncorhynchus mykiss)* and/or African catfish *(Clarias gariepinus).*

15. Use according any one of claims 9 or 13, **characterized in that** the fish are rainbow trout *(Oncorhynchus mykiss)* and/or African catfish *(Clarias gariepinus).*

Fig. 1

Fig. 2

Fig. 3

Europäisches
Patentamt

European
Patent Office

Office européen
des brevets

# EUROPEAN SEARCH REPORT

**Application Number**

EP 23 21 5295

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HASSAAN MOHAMED S ET AL: "Comparative study on the effect of dietary [beta]-carotene and phycocyanin extracted from Spirulina platensis on immune-oxidative stress biomarkers, genes expression and intestinal enzymes, serum biochemical in Nile tilapia, Oreochromis niloticus", FISH & SHELLFISH IMMUNOLOGY, ACADEMIC PRESS, LONDON, GB, vol. 108, 23 November 2020 (2020-11-23), pages 63-72, XP086417918, ISSN: 1050-4648, DOI: 10.1016/J.FSI.2020.11.012 [retrieved on 2020-11-23] | 1-15 | INV. A23K50/80 A23K10/16 A23K20/147 |
| Y | * 2.3. Experimental diets preparation; page 64 * <br> * pages 65-66; tables 3-7 * <br> * 4.1. Growth and feed efficiency; pages 66-67 * <br> * 4.2. Intestinal digestive enzymes; pages 67-68 * <br> * 5. Conclusion; page 69 * | 3,7-15 | |

- - - - -

-/--

TECHNICAL FIELDS
SEARCHED        (IPC)

A23K

The present search report has been drawn up for all claims

| Place of search | Date of completion of the search | Examiner |
|---|---|---|
| Munich | 21 May 2024 | Vermeulen, Stéphane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 23 21 5295

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EL-ARABY DOAA A ET AL: "Dietary Spirulina platensis phycocyanin improves growth, tissue histoarchitecture, and immune responses, with modulating immunoexpression of CD3 and CD20 in Nile tilapia, Oreochromis niloticus", AQUACULTURE, ELSEVIER, AMSTERDAM, NL, vol. 546, 31 August 2021 (2021-08-31), XP086820079, ISSN: 0044-8486, DOI: 10.1016/J.AQUACULTURE.2021.737413 [retrieved on 2021-08-31] | 1-15 | |
| Y | * 2.3. Diet preparation and experimental design; page 2 * * 3.1. Phycocyanin isolation and characterization; page 4 * * 4. Discussion; pages 6-9; tables 3-7 * * 5. Conclusion; page 9 * | 3,7-15 | |
| | ----- | | |
| X | SHEIKHZADEH NAJMEH ET AL: "Spirulina platensis in rainbow trout (Oncorhynchus mykiss) feed: effects on growth, fillet composition, and tissue antioxidant mechanisms", AQUACULTURE INTERNATIONAL, SPRINGER NETHERLANDS, NL, vol. 27, no. 6, 13 June 2019 (2019-06-13), pages 1613-1623, XP036935581, ISSN: 0967-6120, DOI: 10.1007/S10499-019-00412-3 [retrieved on 2019-06-13] | 1-15 | |
| Y | * Fish and experimental design; page 1614 - page 1615; tables 1-5 * | 15 | |
| | ----- | | |

TECHNICAL FIELDS
SEARCHED     (IPC)

-/--

The present search report has been drawn up for all claims

| Place of search | Date of completion of the search | Examiner |
|---|---|---|
| Munich | 21 May 2024 | Vermeulen, Stéphane |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
  after the filing date
D : document cited in the application
L : document cited for other reasons

....................................................................

& : member of the same patent family, corresponding
  document

EPO FORM 1503 03.82 (P04C01)

page 2 of 4

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | J. PROMYA: "The effects of Spirulina platensis and Cladophora algae on the growth performance, meat quality and immunity stimulating capacity of the African sharptooth catfish (Clarias gariepinus)", INTERNATIONAL JOURNAL OF AGRICULTURE AND BIOLOGY, vol. 13, no. 1, 1 January 2011 (2011-01-01), pages 77-82, XP093164270, PK ISSN: 1560-8530 Retrieved from the Internet: URL:https://www.researchgate.net/profile/C hitmanat-Chanagun/publication/279600728_Th e_effects_of_Spirulina_platensis_and_Clado phora_Algae_on_the_Growth_Performance_Meat _Quality_and_Immunity_Stimulating_Capacity _of_the_African_Sharptooth_Catfish_Clarias _gariepinus/links/641db79392cfd54f8428906c /The-effec> | 1-15 | |
| Y | * Materials and methods; page 78 * * figure 1; tables I-V * | 15 | TECHNICAL FIELDS SEARCHED (IPC) |

-/--

The present search report has been drawn up for all claims

| Place of search | Date of completion of the search | Examiner |
|---|---|---|
| Munich | 21 May 2024 | Vermeulen, Stéphane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&: member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 23 21 5295

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NICCOLAI ALBERTO ET AL: "Vegetable oils protect phycocyanin from thermal degradation during cooking of spirulina-based "crostini"", LWT- FOOD SCIENCE AND TECHNOLOGY, ACADEMIC PRESS, UNITED KINGDOM, vol. 138, 15 December 2020 (2020-12-15), XP086447248, ISSN: 0023-6438, DOI: 10.1016/J.LWT.2020.110776 [retrieved on 2020-12-15] | 1-8,14 | |
| Y | * page 2, paragraphs 2.1, 2.2 *<br>* pages 3-4, paragraph 3.2; figure 3 * | 3,7-15 | |
| X | MICHAIL SYRPAS: "Ultrasound-Assisted Extraction and Assessment of Biological Activity of Phycobiliprotein-Rich Aqueous Extracts from Wild Cyanobacteria ( Aphanizomenon flos-aquae )", JOURNAL OF AGRICULTURAL AND FOOD CHEMISTRY, vol. 68, no. 7, 19 February 2020 (2020-02-19), pages 1896-1909, XP093164208, US ISSN: 0021-8561, DOI: 10.1021/acs.jafc.9b05483 | 1-8,14 | TECHNICAL FIELDS SEARCHED (IPC) |
| Y | * Introduction: last paragraph; page 1897, left-hand column *<br>* Extraction of PBPs; page 1897, right-hand column *<br>* figures 1-4; table 2 * | 9-15 | |

The present search report has been drawn up for all claims

| Place of search | Date of completion of the search | Examiner |
|---|---|---|
| Munich | 21 May 2024 | Vermeulen, Stéphane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 102106122 B1
- KR 101620734 B1

### Non-patent literature cited in the description

- Enhancement of biomass and phycocyanin content of Spirulina platensis. **KHAZI MI** ; **DEMIREL Z** ; **CONK DALAY M**. Front Biosci. 01 January 2018, vol. 10, 276-286
- **HORVÁTH H.** ; **KOVÁCS A.W.** ; **RIDDICK C** ; **PRÉSING M.** Extraction methods for phycocyanin determination in freshwater filamentous cyanobacteria and their application in a shallow lake. *European Journal of Phycology*, 2013, vol. 48 (3), 278-286
- **JULIANTI E.** ; **SUSANTI M.S** ; **MULYANI L.N**. Optimization of extraction method and characterization of phycocyanin pigment from Spirulina platensis. *Journal of Mathematical and Fundamental Sciences*, 2019, vol. 51 (2), 168-176
- **VERDILE N** ; **PASQUARIELLO R** ; **SCOLARI M** ; **SCIRÈ G** ; **BREVINI TAL** ; **GANDOLFI F**. A Detailed Study of Rainbow Trout (Onchorhynchus mykiss) Intestine Revealed That Digestive and Absorptive Functions Are Not Linearly Distributed along Its Length. *Animals (Basel).*, 24 April 2020, vol. 10 (4), 745
- **ASGARI M** ; **ABEDIAN KENARI A** ; **ESMAEILI M** ; **ROMBENSO A.** Effects of hydroalcoholic extract of honeybee pollen on growth performance, flesh quality, and immune and stress response response of rainbow trout (Oncorhynchus mykiss). *Aquacult. Nutr*, 2020, vol. 26, 1505-1519
- **GHOSI MOBARAKI MR** ; **ABEDIAN KENARI A** ; **BAHRAMI GORJI S** ; **ESMAEILI M**. Effect of dietary fish and vegetable oil on the growth performance, body composition, fatty acids profile, reproductive performance and larval resistance in pearl gourami (Trichogaster leeri). *Aquacult. Nutr.*, 2020, vol. 26, 894-907
- **VAN DE VIS H** ; **KIESSLING A** ; **FLIK G** ; **MACKENZIE S**. *Welfare of farmed fish in present and future production systems*, 2012
- **YENGKOKPAM** ; **SONA** ; **DEBNATH, DIPESH**. *Nutrition and feed technology for producing healthy fish through aquaculture*, 2016
- **SOGBESAN OA** ; **UGWUMBA AAA.** Bionomics evaluations of garden snail (Limicolaria Aurora Jay) meat meal in the diet of Clariasgariepinus fingerlings. *Nigeria J. of Fisheries*, 2006, vol. 2-3 (2), 358-371
- **ZHOU C** ; **XU D** ; **LIN K** ; **SUN C** ; **YANG X**. Intelligent feeding control methods in aquaculture with an emphasis on fish: a review.. *Rev. Aquae.*, 2018, vol. 10, 975-993
- **WU TH** ; **HUANG YI** ; **CHEN JM**. Development of an adaptive neural-based fuzzy inference system for feeding decision-making assessment in silver perch (Bidyanus bidyanus) culture. *Aquae. Eng*, 2015, vol. 66, 41-51
- Aquafeed Formulation. 09 October 2015
- **CRAIG, S** ; **KUHN, D** ; **SCHWARZ, M**. Understanding Fish Nutrition, Feeds, and Feeding. *Virginia Cooperative Extention*, 2017, 1-6
- **C. D. WEBSTER**. Introduction to fish nutrition.. *Aquaculture Research Center Kentucky State University Frankfort KY 40601 USA*, ISBN 978-0-85199-702
- **TOCHER DR**. Omega-3 long-chain polyunsaturated fatty acids and aquaculture in perspective. *Aquaculture*, 2015, vol. 449, 94-107
- **ABBASI, A** ; **OUJIFARD, A** ; **TORFI MOZANZADEH** ; **M, HABIBI** ; **H, NAFISI BAHABADI**. M. Dietary simultaneous replacement of fish meal and fish oil with blends of plant proteins and vegetable oils in yellowfin seabream (Acanthopagrus latus) fry: Growth, digestive enzymes, antioxidant status and skin mucosal immunity. *Aquacult Nutr.*, 2020, vol. 26, 1131-1142
- **CLARISSA VILELA FIGUEIREDO DA SILVA CAMPOS** ; **LAENNE BARBARA SILVA DE MORAES** ; **RENATA DA SILVA FARIAS** ; **WILLIAM SEVERI** ; **LUIS OTAVIO BRITO** ; **ALFREDO OLIVERA GÁLVEZ**. Phytoplankton communities in aquaculture system (integration of shrimp and seaweed). *Chemistry and Ecology*, 2019, vol. 35 (10), 903-921

- **SERRADELL A** ; **TORRECILLAS S** ; **MAKOL A** ; **VALDENEGRO V** ; **FERNÁNDEZ-MONTERO A** ; **ACOSTA F** ; **IZQUIERDO MS** ; **MONTERO D.** Prebiotics and phytogenics functional additives in low fish meal and fish oil based diets for European sea bass (Dicentrarchus labrax): Effects on stress and immune responses. *Fish Shellfish Immunol.*, May 2020, vol. 100, 219-229
- **PRABU, E. S.** An Overview On Significance Of Fish Nutrition In Aquaculture Industry. *Journal of Fisheries And Aquatic Studies*, 2017, vol. 5 (6), 349-355
- **KAMALAM, B.S** ; **MEDALE, F.** ; **PANSERAT, S**. Utilisation of dietary carbohydrates in farmed fishes: new insights on influencing factors, biological limitations and future strategies. *Aquaculture*, 2017, vol. 467, 3-27
- **TSAO, CONSTANCE S**. An overview of ascorbic acid chemistry and biochemistry.. *Vitamin C in health and disease.*, 1997, 25-58
- **TRICHET, VIVIANE VERLHAC**. Nutrition and immunity: an update. *Aquaculture research*, 2010, vol. 41 (3), 356-372
- **LUKASZEWICZ, MARCIN et al.** Antioxidant capacity manipulation in transgenic potato tuber by changes in phenolic compounds content.. *Journal of Agricultural and Food Chemistry*, 2004, vol. 52 (6), 1526-1533
- **TRUSHENSKI, JESSE T.** ; **CRAIG S. KASPER** ; **CHRISTOPHER C. KOHLER**. Challenges and opportunities in finfish nutrition. *North American Journal of Aquaculture*, 2006, vol. 68 (2), 122-140
- **FROEHLICH** ; **HALLEY E et al.** Comparative terrestrial feed and land use of an aquaculture-dominant world. *Proceedings of the National Academy of Sciences*, 2018, vol. 115 (20), 5295-5300
- **BARRAGAN-FONSECA** ; **KAROL B** ; **MARCEL DICKE** ; **JOOP JA VAN LOON**. Nutritional value of the black soldier fly (Hermetia illucens L.) and its suitability as animal feed-a review.. *Journal of Insects as Food and Feed 3.2*, 2017, 105-120
- **NAIEL** ; **MOHAMMED AE** ; **NAHLA EM ISMAEL** ; **SABRY A. SHEHATA**. Ameliorative effect of diets supplemented with rosemary (Rosmarinus officinalis) on aflatoxin B1 toxicity in terms of the performance, liver histopathology, immunity and antioxidant activity of Nile Tilapia (Oreochromis niloticus).. *Aquaculture*, 2019, vol. 511, 734264
- **HASSAAN** ; **MOHAMED S. et al.** Eubiotic effect of a dietary potassium diformate (KDF) and probiotic (Lactobacillus acidophilus) on growth, hemato-biochemical indices, antioxidant status and intestinal functional topography of cultured Nile tilapia Oreochromis niloticus fed diet free fishmeal. *Aquaculture*, 2021, vol. 533, 736147
- **JULIANTI E** ; **SUSANTI M.S** ; **MULYANI L.N.** Optimization of extraction method and characterization of phycocyanin pigment from Spirulina platensis. *Journal of Mathematical and Fundamental Sciences*, 2019, vol. 51 (2), 168-176